# EUROPEAN PATENT SPECIFICATION

(11) **EP 3 163 243 B1**
(45) Date of publication and mention of the grant of the patent: **14.08.2019**
(21) Application number: 15382533.6
(22) Date of filing: 28.10.2015
(51) Int. Cl.: F28F 9/00, F28F 9/02, F28D 7/16, F28D 21/00, F02G 5/02, F22B 1/18

(54) **EVAPORATOR**
VERDAMPFER
ÉVAPORATEUR

(43) Date of publication of application: 03.05.2017
(73) Proprietor: BORGWARNER EMISSIONS SYSTEMS SPAIN, S.L.U., 36315 Vigo Pontevedra (ES)
(72) Inventor: FOLGUEIRA BALTAR, Adrián, E-27850 Viveiro - Lugo (ES); GRANDE FERNÁNDEZ, José Antonio, E-36206 Vigo - Pontevedra (ES); DIÉGUEZ, Manuel, E-36209 Vigo - Pontevedra (ES)
(74) Representative: ABG Intellectual Property, S.L.

(56) References cited:
- EP-A1- 2 570 646
- JP-A- H1 113 551
- JP-A- 2005 331 217
- US-A1- 2003 159 807
- US-A1- 2004 182 546
- US-A1- 2004 182 547
- US-A1- 2014 123 965
- US-A1- 2014 223 738
- US-A1- 2015 060 028

## Description

### Object of the Invention

The present invention relates to a cross flow evaporator adapted to generate vapor from the heat of the exhaust gases from an internal combustion engine. The evaporator is constituted, among other elements, by two plates spaced from one another which contain chambers. The heat exchange tubes alternately communicate the chambers of both plates, establishing a specific path for the fluid intended to change phases. The tubes extending between the chambers of the two plates are arranged transverse to the flow of the hot gas.

This evaporator is adapted for heat recovery systems using a Rankine cycle, making use of the heat from the exhaust gases.

The invention is characterized by a special configuration of the walls which prevents the crack failure or damage caused as a result of the differential expansion between the exchange tubes and said walls.

### Background of the Invention

Heat exchangers are devices intended for transferring heat from a first hot fluid to a second fluid which is initially at a lower temperature.

A specific case of heat exchangers is those exchangers intended for cooling the hot exhaust gas for EGR (Exhaust Gas Recirculation) systems through a liquid coolant. This type of heat exchangers must overcome specific technical problems due to temperature changes in their different components.

The temperature variation ranges go from its resting state, where all the components are at room temperature, to its operative mode, where the inlet gases may reach more than 600 degrees centigrade, producing significant differences in temperature in different parts of the device.

The structure of this type of exchangers is configured as a heat exchange tube bundle through which the hot gas circulates, and this tube bundle is housed in a shell through which the liquid coolant circulates.

If the liquid coolant enters and exits approximately at points of the shell located near the ends of the tube bundle, then the flows of gas and liquid circulate approximately according to parallel directions, whether co-current or countercurrent.

Problems caused by thermal expansion are solved by making use of intermediate manifolds, which receive or deliver the hot gas, which in turn have bellows-type structures that compensate for the differential expansion between the tube bundle, in contact with the hot gas, and the shell, in contact with the liquid coolant.

A different type of heat exchanger is that consisting of evaporators. Evaporators are heat exchangers designed to transfer the heat of a hot gas to a liquid that is not only heated up but also changes phase.

For instance US2015/0060028 A discloses an exhaust gas evaporator, having a housing with a fluid inlet and a fluid outlet for a first medium, such as in particular exhaust gas, and having tubes which are arranged in the housing transversely with respect to the flow direction of the first fluid and through which a second medium can flow and the ends of which are arranged and connected in a fluidtight manner in a tube sheet at the inlet side and at the outlet side.

The technical challenges presented in an evaporator are greater than those of a heat exchanger such as the one described at the beginning of this section. The phase change allows differentiating three steps in connection with the temperature and the state of the liquid changing phase:
i. step of heating the liquid to be evaporated;
ii. step of changing phase;
iii. step of overheating.

The first and second steps occur at not very high temperatures, since the phase change temperature establishes a barrier which prevents raising the temperature above the evaporation temperature. In contrast, the overheating step is not limited by the phase change and may raise the temperature up to values close to maximum temperature values for the hot gases.

The inlet temperature conditions of the two fluids, the hot gas that transfers its heat and the liquid intended for changing phase, are not always the same and neither are the inlet flow rates. The variation of these variables means that the interphase between the first and second step, and the interphase between the second and third step, do not occur in the same place inside the evaporator, in connection with the path of the liquid intended for changing phase inside the device, rather it can occur in different places within a certain interval of said path.

Additionally, going from liquid to vapor and going from the mixture of liquid and vapor to superheated vapor is not instantaneous, so no precise place may be identified where the division is established between steps, rather such divisions are in a specific segment.

Each of the steps has different heat exchange conditions. The heat transfer coefficients between the surface of the heat exchange tube and the liquid (step i) are very different from those of a two-phase flow, i.e., the flow formed by liquid plus vapor (step ii), and very different from the heat transfer coefficients of the superheated vapor (step iii).

Not only are the heat transfer coefficients different, but the specific volume in the liquid is very low with respect to the specific volume in the liquid-plus-vapor mixture, and this in turn is low with respect to the specific volume of vapor when the temperature thereof is rising.

All these very different factors between the three steps make the design variables different and the evaporator have technical difficulties that a heat exchanger with no phase change does not present, above all when the evaporator must be compact and occupy the smallest possible space.

Compact heat exchangers are known that are designed to act as evaporators in heat recovery systems in internal combustion engines for impulsion of vehicles. These evaporators increase the heat exchange surface by arranging a bundle of pairs of coaxial tubes. The liquid intended for changing phase passes through the space between the pair of coaxial tubes and the hot gas passes both inside the inner tube and outside the outer tube.

The fluid changing phase passes between two hot surfaces with little distance between them so that the raising of the temperature and the subsequent phase change takes place within a length of the pair of coaxial tubes that is shorter than if only one tube for circulating the fluid changing phase therein and the hot gas on the outside thereof, were used.

With this configuration one of the problems that exists is that the three heat exchange steps take place throughout the same tubes, so the design of the exchanger cannot be optimized for the three steps at the same time.

As an example of this difficulty, the speed of the inlet flow in liquid phase may be very low due to the low value of the specific volume, while at the outlet, the same liquid flow rate corresponds to a much larger volume of vapor, which imposes much higher speed values than those of the entrance of liquid.

Low speed at the inlet can lead to the deposition of dirt and the high speed of the vapor at the outlet can generate excessive pressure drops.

The present invention avoids these problems by using a cross-flow configuration between the hot gas and the fluid changing phase.

The evaporator is constituted, among other elements, by two plates spaced from one another which contain chambers. The heat exchange tubes alternately communicate the chambers of both plates.

The hot gas flows between the plates, parallel to both, in a volume closed by side walls. With this configuration, the exchange tubes are transverse to the flow. The length needed to obtain the vapor at a specific temperature is attained by incorporating the number of tubes needed to reach the length which allows the sufficient heat transfer and therefore cover the three steps.

An advantage that this configuration has is the possibility of communicating two chambers with more than one heat exchange tube in such a way that, after a phase change takes place, the chambers between which the fluid is being transferred can be communicated with a growing number of tubes. The growing number of tubes is equivalent to an increase in the passage section, and the device thereby takes into account the increase in the specific volume with the phase change.

Expansion of a heat exchange tube depends on the thermal expansion coefficient and on the total length of the tube. With the configuration of the device according to the invention, each of the individual tubes extending between both plates is much shorter than the total length of the path, so the effect of expansion is noticeably reduced.

Nevertheless, although expansion of each of the tubes is noticeably reduced, the tubes conveying the first fluid in the first step, in the second step and in the third step are at very different temperatures, their ends being attached to the same plates. The differential expansion between tubes means that along the path of the first fluid inside the evaporator, the plates tend to be spaced in an unequal manner between the inlet of the first fluid and the inlet of the second fluid.

This differential expansion is furthermore restricted by the walls enclosing the volume where the second fluid, i.e., the hot gas, passes because such walls are also attached to the plates connected at the ends of the exchange tubes.

The differential expansion between all these structural elements generates stresses that can give rise to the crack failure of the device.

The present invention establishes a configuration that solves this problem. Additional solutions are established by means of embodiments which provide a device showing greater energy use and even lower stresses due to the effect of thermal expansion.

### Description of the Invention

As indicated at the end of the preceding section, a first aspect of the invention is an evaporator for the evaporation of a first fluid by means of the heat provided by a second fluid, the second fluid being a hot gas.

According to a preferred example, as will be described below, the fluid intended for changing phase is ethanol, an alcohol, and the hot gas is the exhaust gas of an internal combustion engine. One very useful application is the use of the evaporator in a Rankine cycle to recover the heat from the exhaust gases in the form of mechanical energy which would otherwise end up being discharged into the atmosphere.

The evaporator comprises:
*a first plate and a second plate facing one another and arranged spaced from one another, defining an inner face, the face facing the other plate, and an outer face opposite the inner side; wherein each of the plates comprises a plurality of chambers;*
*an intake manifold of the first fluid and an exhaust manifold of the first fluid located in fluid communication with one another and with at least one different chamber of any of the plates;*
*a plurality of heat exchange tubes wherein each of the heat exchange tubes extends between a chamber of the first plate and a chamber of the second plate; wherein each chamber of a plate is in fluid communication with two or more chambers of the other plate by means of at least two heat exchange tubes, except the chambers in fluid communication with the intake manifold or the exhaust manifold;*
*there being for each of the heat exchange tubes a path of fluid communication from the intake manifold to the exhaust manifold passing through the inside of said heat exchange tube;*
*two side walls extending between the first plate and the second plate housing the plurality of heat exchange tubes and establishing between both a space for the passage of the second fluid, wherein the second fluid enters through an inlet and exits through an outlet;*

The flow of the second fluid, the hot gas, is established between an inlet and an outlet throughout a space defined by the two plates and by the two side walls. In the preferred configuration the two plates are parallel to one another and the side walls are also parallel to one another and perpendicular to the two plates. A prism with rectangular bases is defined with this configuration.

The heat exchange tubes extend between the chambers of both plates, crossing the inner space defined by the plates and the walls. The arrangement of the exchange tubes with respect to the main flow of the second fluid is transverse.

The exchange tubes alternately transfer the flow of the first fluid from one chamber of the first plate to another chamber of the second plate. A first chamber is communicated with an intake manifold of the first fluid.

The passage from one chamber located in the first plate to the chamber located in the second plate, or vice versa, is made through the exchange tubes. The exchange tubes are located crossing the flow of the second fluid, i.e., the hot gas. It is in this passage through the exchange tubes where the second fluid transfers its heat to the first fluid.

The last chamber is communicated with an exhaust manifold that collects the first fluid in superheated vapor phase, and takes it to the conduit which leads it to the application for which it is intended.

When the first fluid enters it is in liquid phase with a reduced specific volume. The necessary liquid flow rate can be transported by means of one or a few exchange tubes. Therefore, the first chambers of both plates are connected through one or a few heat exchange tubes.

Once the first step of raising the temperature of the liquid has passed, the phase change begins where the appearance of vapor increases the specific volume. After a specific chamber, i.e., the chamber where the second step is expected to begin, the number of heat exchange tubes communicating one chamber with the next chamber of the other plate is higher, giving rise to an increase in the passage section which compensates for said increase in the specific volume, reducing the speed and pressure drop.

According to preferred examples of the invention, the consecutive arrangement of the chambers is ordered according to the direction of movement of the second fluid, i.e., the hot gas, where transverse paths can also be drawn in a zigzag configuration, depending on the width of the evaporator. The set of exchange tubes is therefore arranged in a very compact and orderly manner, and said order does not prevent increasing the number of tubes per chamber.

With this configuration, the first fluid enters a first chamber through the intake manifold. From this first chamber it passes to another chamber of the opposite plate through one or more heat exchange tubes. This first fluid alternately passes from chambers of one plate to chambers of the other plate, being able to increase the number of heat exchange tubes communicating one chamber to another to compensate for the increase in specific volume due to the phase change. Once the last chamber is reached, this chamber is in fluidic communication with the exhaust manifold which discharges the first fluid in the form of superheated vapor.

According to the invention, in the evaporator *the side walls are elastically deformable, allowing to compensate the differential expansion between the heat exchange tubes and said side* walls,wherein said evaporator additionally comprises second side walls, situated between the first plate and the second plate, these second side walls being spaced from the first side walls, wherein the second side walls are elastically deformable and are arranged internally with respect to the first side walls, wherein the stiffness of the first walls is greater than the stiffness of the second walls.

The walls of the evaporator are in contact with the second fluid, i.e., the hot gas, whereas the heat exchange tubes are in contact with both fluids, with the first fluid on the inner portion thereof and with the second fluid on the outer portion thereof. These two different conditions give rise to expansions in the direction of the exchange tubes which are also different.

Given that the side walls and the exchange tubes are attached to the first and to the second plate, differential expansion causes stresses that can give rise to structural damage or even the crack failure of the evaporator.

Not only is there differential expansion between the walls and the exchange tubes, but the expansion and the differences in expansion between these components changes at least along the forward movement direction of the first fluid, the fluid that changes phase, because depending on the phase of such fluid, the temperatures of the tubes are different and the variation thereof is not even linear along the path thereof.

All these causes are grounds for the crack failure of the evaporator, or at least for the generation of stresses causing damage to the welds, or they are a cause of fatigue in the materials. The invention solves this problem incorporating elastically deformable side walls which yield to the expansion imposed by the tube bundle, drastically reducing stresses due to the differential expansions identified above.

The elastically deformable feature means that the material from which the part is made allows deformation in the event of a stress and that, after deformation, the part recovers its original shape when the causes generating said deformation cease. Nevertheless, in the scope of the invention, the existence of minor plastic deformations, particularly in thermal fatigue conditions, is allowed.

In the strict sense, when plastic deformation occurs, such deformation is referred to as elastoplastic deformation. These minor plastic deformations continue to favor solving the problem given that they also absorb differential expansions between elements.

The term elastically deformable used throughout the description and claims must be interpreted in this broader sense, where it is possible that a minor percentage of the deformation is plastic deformation.

The result is a reduction of maximum stresses attained in given structural parts of the evaporator, increasing the service life of said evaporator as it is not subjected to the same degree of thermal fatigue.

Various additional technical solutions solving other specific problems will be shown by means of the description of the embodiments.

### Description of the Drawings

These and other features and advantages of the invention will be better understood based on the following detailed description of a preferred embodiment, given solely by way of illustrative, non-limiting example in reference to the attached drawings.
Figure 1 shows a perspective view of an embodiment of the invention. In this figure, some heat exchange tubes have been intentionally removed from the inside for greater clarity.
Figure 2 shows a schematic section view of another embodiment of the invention that allows observing the inside of the evaporator, of the two plates and of some of the chambers, as well as the exchange tubes going from one plate to the other.
Figure 3A shows a detail of a schematic section of another embodiment that allows observing a constructive detail of the plate, manufactured by means of stacking of die-cut plates, in which the chambers are configured.
Figure 3B shows a top view of an embodiment of one of the die-cut metal sheets giving rise to one of the main plates of the evaporator.
Figure 4 shows a perspective view of one of the plates according to another embodiment, in which the chambers are configured.
Figure 5 shows a cross section with respect to the longitudinal direction X-X' defined by the direction of the flow of the second fluid of one embodiment with first walls situated on the outside and second walls situated on the inside.
Figure 6 shows a perspective view of an embodiment of an elastically deformable wall.

### Detailed Description of the Invention

According to the first aspect of the invention, the present invention relates to an evaporator intended for transferring the heat from a hot gas to a liquid, which raises its temperature, changes phase and exits as superheated vapor.

In the embodiments, the hot gas, the one identified as second fluid, is the exhaust gas of an internal combustion engine. In these embodiments, the first fluid is ethanol. Ethanol enters in liquid phase inside the evaporator. The transfer of heat from the second fluid to the first fluid leads to a first step where the temperature of the first fluid raises until reaching the boiling temperature; in a second step it changes phase, maintaining the temperature about equal to the boiling temperature; and in a third step, in the vapor phase the temperature further increases.

In this embodiment, the superheated ethanol vapor is used in a Rankine cycle to generate mechanical energy recovering part of the heat from the exhaust gases of the internal combustion engine.

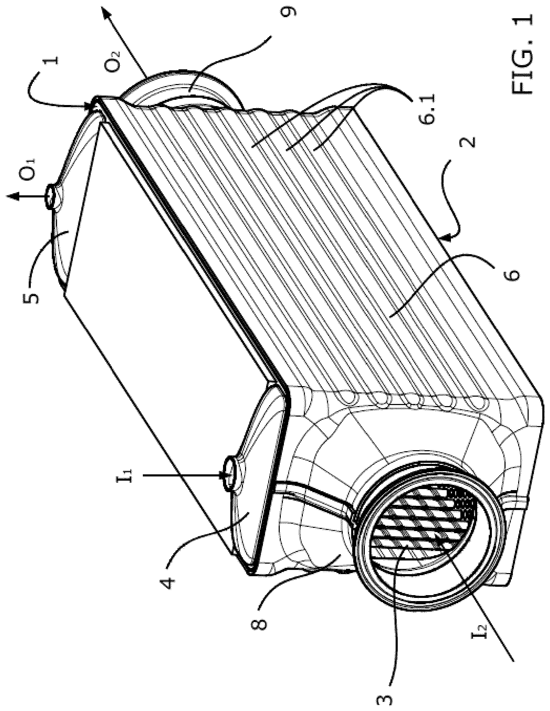

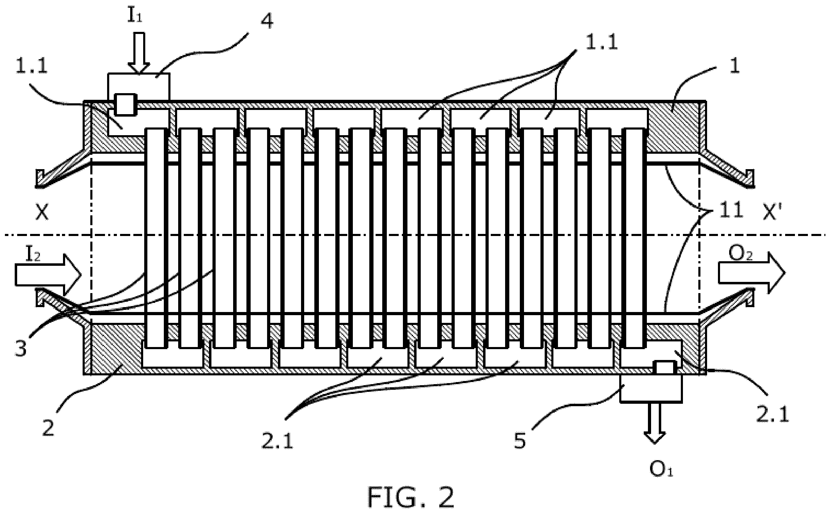

As shown in Figures 1 and 2, according to embodiments of the invention, the evaporator is formed by two rectangular plates (1, 2), with two longer sides and two shorter sides, spaced from and parallel to one another. In the figures, the parallel plates (1, 2) are depicted as being horizontal up and down according to the orientation of the drawings.

The longer sides of the plates (1, 2) are connected by means of respective side walls (6) in the form of a flat plate that limits a prismatic-shaped internal volume with essentially rectangular bases. These side walls (6) are the walls depicted as being vertical in Figure 1.

The shorter sides of the plates correspond to the ends of the evaporator where the inlet (I₂) for the second fluid is located, and the outlet (O₂) is located at the opposite end. The direction of the second fluid establishes a longitudinal direction identified as X-X' in Figure 2.

Each of the plates (1, 2) has a plurality of chambers (1.1, 2.1). Exchange tubes (3) extend from one chamber (1.1, 2.1) of a plate (1, 2) to another chamber (1.1, 2.1) of the other plate (1, 2). The heat exchange tubes (3) are arranged transverse to the flow of the second fluid; i.e., transverse to the longitudinal direction X-X'.

Each chamber (1.1, 2.1) has exchange tubes (3) such that it is in fluid communication with two or more chambers (1.1, 2.1) of the other plate (1, 2). The chamber receives the first fluid through the exchange tubes (3) coming from a chamber (1.1, 2.1) of the other plate (1, 2) and the fluid exits towards the other chamber of the other plate (1, 2) through the other exchange tubes (3) connecting them.

Figure 2 schematically depicts this condition by offsetting the chambers (1.1) of the first plate (1) and the chambers (2.1) of the second plate (2) according to the longitudinal direction X-X' .

By means of this connection of the chambers (1.1, 2.1), the first fluid passes through the chambers sequentially, crossing from one plate (1, 2) to the other through the exchange tubes (3) .

According to the section view depicted in Figure 2, the flow of the first fluid follows a zigzag path, alternating between the first plate (1) and the second plate (2), moving from left to right. Nevertheless, there can be additional chambers (1.1, 2.1) according to the transverse direction which are prolonged according to the direction perpendicular to the plane of the paper, as depicted in Figure 2, such that the path can also alternate between the first plate (1) and the second plate (2), following a zigzag path, before passing to the next chamber (1.1, 2.1) according to the direction X-X'.

Another option that allows increasing the volume of flow that is conveyed is to use two or more rows of tubes in the communication between two chambers.

The heat exchange tubes (3) are distributed inside the prismatic volume defined by the plates (1, 2) and the side walls (6) with an orientation transverse to the direction of the main flow of the second fluid. The path followed by the first fluid in the path, alternating between the first plate (1) and the second plate (2), will depend on how the chambers (1.1, 2.1) of both plates (1, 2) are overlapped, overlap being understood as that obtained by means of a projection according to the direction perpendicular to any of the mid-planes of the plates (1, 2). The chambers (1.1, 2.1) between which the passage of the first fluid in the first plate (1) and in the second plate (2) is alternated are shown as being consecutively overlapped according to a projection in the direction perpendicular to both plates (1, 2).

Said Figure 2 shows a first chamber (1.1) of the first plate (1) in fluid communication with an intake manifold (4). The path of the first fluid ends in a last chamber (2.1) of the second plate (2) in fluid communication with a second outlet manifold (5).

In the example shown in Figure 1 the inlet manifold (4) and outlet manifold (5) are in the same plate (1), whereas in the example shown in Figure 2 they are in different plates (1, 2).

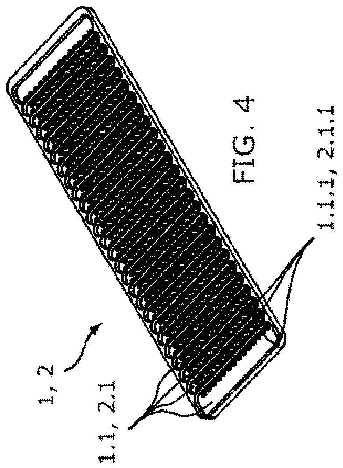

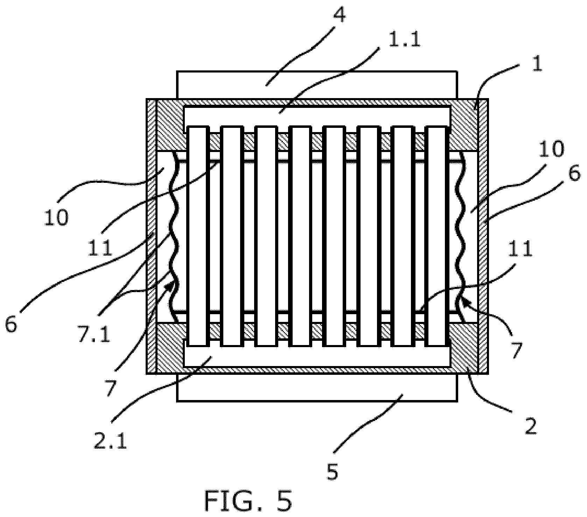

In the embodiment of Figures 2 and 5, the plates (1, 2) have chambers (1.1, 2.1) configured by means of machining. The machining of the chambers (1.1, 2.1) gives rise to slots such as those shown in Figure 4. In Figures 2 and 5, the heat exchange tubes (3) are depicted as being parallel and in Figure 4, the perforations that receive the exchange tubes (3) are offset, leaving a staggered distribution.

Each of the slots is closed with an upper metal sheet configuring each of the chambers (1.1, 2.1) therein from the slots.

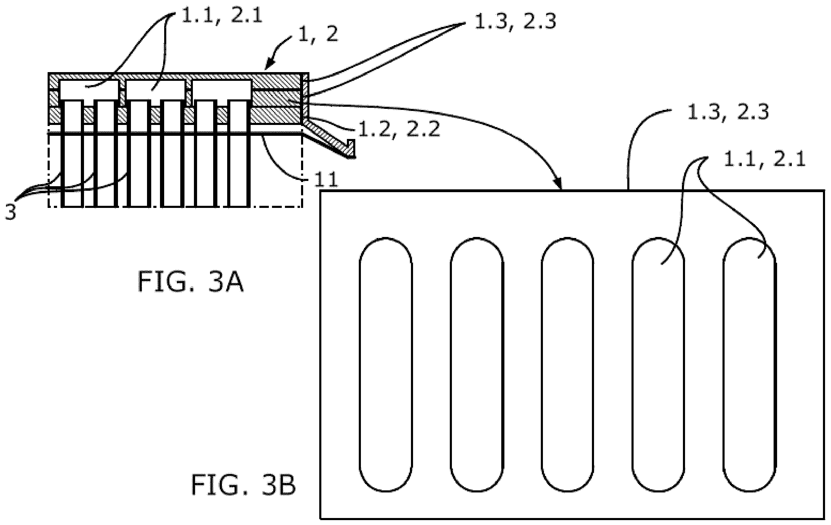

The detail of Figure 3A shows an alternative way of configuring the main plates (1, 2) of the evaporator. Each of the main plates (1, 2) is in turn formed by a first elemental plate (1.2, 2.2) having perforations to allow for the passage of the ends of the heat exchange tubes (3), and a second elemental, die-cut plate (1.3, 2.3) with perforations to configure the chambers (1.1, 2.1), the first elemental plate (1.2, 2.2) and the second elemental plate (1.3, 2.3) being attached to one another.

In this particular example, to limit the thickness of the plate to be die-cut, two identical die-cut plates are used, and once stacked form the second elemental plate (1.3, 2.3). The desired thickness, or in other words, the height of the chamber (1.1, 2.1) formed by the perforations, can be obtained by stacking a plurality of plates (1.3, 2.3).

Figure 3B shows a second die-cut plate (1.3, 2.3) with the perforations giving rise to the chambers (1.1, 2.1).

In the described examples, whether the slots are formed by a machining operation on the plate (1, 2) or are obtained by stacking second die-cut plates (1.3, 2.3), the inner walls (1.1.1, 2.1.1) of the slots are perpendicular to the main plane of the plate (1, 2). Nevertheless, other methods for producing a slot do not have to give rise to vertical walls.

Figure 5 shows a section of the evaporator perpendicular to direction X-X' established by the flow of the second fluid and according to one embodiment.

According to the section and according to the position shown in Figure 5, the first plate (1) is arranged at the top and the second plate (2) is arranged at the bottom. The section coincides with chambers (1.1, 2.1) which, in both the upper plate (1) and lower plate (2), extend along the entire width.

If the section were to be established at a point closer to the inlet of the first fluid, this same section could present a larger number of chambers (1.1, 2.1) such that there is also an exchange between both plates (1, 2) according to a transverse path. This transverse path would be contained in the plane corresponding to the section.

The heat exchange tubes (3) are subjected to the heat of the hot gas on the outer surface thereof and to the first fluid, ethanol, with a lower temperature, on the inner surface thereof. Particularly in the first step, the temperature of the tubes is below the boiling temperature for ethanol. At the end of the evaporator, the tubes are at temperatures close to the inlet temperature of the hot gas because the ethanol is overheated. This temperature gradient gives rise to a progressive expansion from one end of the evaporator to the opposite end.

The plates (1, 2) are linked through both the heat exchange tubes (3) and the walls (6). According to the example shown in Figure 1, the walls (6) are in contact with the hot gas.

The larger spacing between plates (1, 2) and the fact that this spacing is larger at one end than at the other generates stress in the walls (6). This stress can give rise to excessive values causing damage to, or even the crack failure of, the evaporator.

The invention establishes as a condition that the walls (6) must be elastically deformable, such that the stress generated by the greater difference in thermal expansion with the exchange tubes is compensated with the elastic deformation of the walls (6). A particular way of achieving the walls (6) to be elastically deformable is by using plates with one or more crimps or corrugations (6.1) according to the direction transverse to the direction in which they are desired to be elastically deformable.

A particular configuration of the crimps (6.1) is sinusoidal. The advantage of such crimps (6.1) is that the two main directions of the plane containing the plate in the path of the crimp along the sinusoid are combined, and greater stiffness against bending is maintained while providing the capacity of being elastically deformable with respect to tension in the direction transverse to the main axis of the sinusoid.

In order to compensate for the progressive expansion of the heat exchange tubes (3) according to longitudinal direction X-X' in which the hot gas flows, according to one embodiment the crimps (6.1) extend according to said longitudinal direction X-X' whether they are longitudinal or sinusoidal.

According to another embodiment, the heat exchange tubes (3) are also elastically deformable. One way of getting them to be elastically deformable is by means of a helical corrugation.

Compression of the heat exchange tubes (3) reduces the gap between plates as a result of expansion and further reduces stresses to a greater extent.

The expansion occurring on the walls (6) is caused primarily by the fact that they are in direct contact with the hot gas. According to the invention, shown by the embodiment in Figure 5, the evaporator comprises second walls (7), situated on the inside and spaced from the first walls (6). Now these inner second walls (7) are the ones in direct contact with the hot gas. The second walls also extend between the first plate (1) and the second plate (2). These second walls are elastically deformable such that the expansion caused as a result of the hot gas is compensated for with their capacity for being elastically deformed.

In the graphical depiction, a corrugated line has been used to show that it has a corrugated configuration (7.1), which is what provides said second walls with their elastically deformable behavior.

In this embodiment elastically deformable first walls (6) and elastically deformable second walls (7) have been selected, where the stiffness of the first walls (6) is greater than the stiffness of the second walls (7). With this configuration, the inner walls demarcate the flow of the hot gas and do not increase stresses due to the more notable effects of expansion, and the first walls (6) provide the necessary stiffness to the entire assembly without generating stresses that generate fractures because they are also elastically deformable.

Between the first walls (6) and the second walls (7) there is a chamber (10) that can contain insulating means, preventing heat from seeping out reducing the heat recovery capacity of the device.

Air, a coolant, ethanol, or even vacuum are considered among the insulating means.

According to another embodiment, when the first fluid, in this case ethanol, is in liquid phase it is made to pass through the chamber (10) formed between the first walls (6) and the second walls (7). This liquid cools both walls (6, 7), and in particular the second walls (7) which are at a higher temperature as they are in direct contact with the hot gas.

As an additional effect, the temperature of the first fluid increases. The passage through the chamber (10) is carried out before introducing the first fluid in the inlet into the manifold (4) communicating with the first chamber (1.1) of the first plate (1). The first fluid therefore has a temperature closer to the boiling temperature, and the energy required for the first step as well as the total length of the heat exchanger are reduced.

According to the embodiment shown in Figures 2, 3A and 5, the evaporator includes two shield plates (11). The first plate (1) has a shield plate (11) spaced from said first plate (1) as shown on the top part of the evaporator, and the second plate (2) has a shield plate (11) also spaced from the second plate (2) .

The space between the first plate (1) and its shield plate (11), or the space between the second plate (2) and its shield plate (11), forms a chamber protecting the welds between the exchange tubes (3) and the main plates (1, 2).

The shield plates (11) have perforations to allow the passage of the exchange tubes (3). The perforations of the shield plates (11) allow the passage therethrough, but the shield plates (11) are not necessarily attached to the exchange tubes (3). As they are not attached to the exchange tubes (3), there is no damage to the welds, nor are they affected by the expansion of the exchange tubes (3).

Figure 5 shows the second walls (7), independent of the shield plates (11). According to another embodiment, both are configured from one and the same plate.

According to another embodiment, the second internal walls (7) are prolonged inside the intake manifold (8) of the second fluid, inside the exhaust manifold (9) of the second fluid, or inside both. This prolongation is spaced from the corresponding manifold (8, 9) forming a chamber offering protection from direct contact with the hot gas.

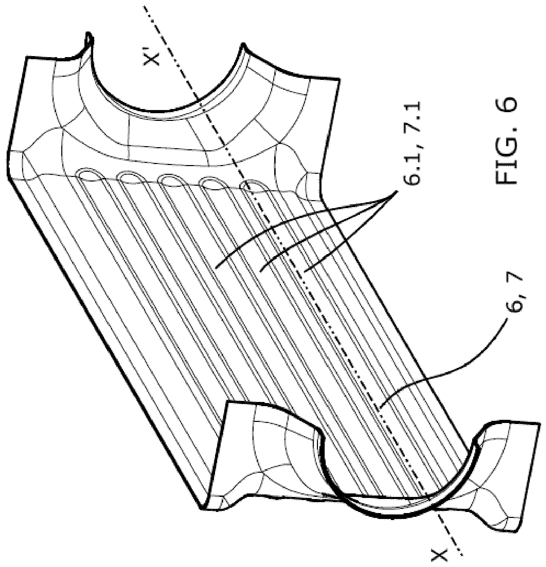

Figure 6 shows an embodiment of a side wall (6, 7), with the prolongations for the manifolds (8, 9). The use of two symmetrical parts as shown, facing one another, establishes the walls on both sides of the evaporator, as well as the chambers for protecting the manifolds (8, 9). This side wall (6, 7) shows a corrugation that is prolonged along the longitudinal direction X-X' so that the side wall (6, 7) is elastically deformable at least in the direction joining the first plate (1) and the second plate (2).

The configuration of the first inner-walls (6) and of the second inner walls (7) can differ in dimensions of the parts thereof so that the walls (6) and other walls (7) can be arranged parallel, can maintain the surfaces inside the intake manifold (8) and exhaust manifold (9) forming inner chambers in both cases, and it can also differ in the corrugation or crimps (6.1, 7.1) providing the elastically deformable behavior to determine the degree of stiffness thereof.

Once the two parts are attached as shown in Figure 6, the upper edge is configured for being adapted to the periphery of the first plate (1) and the lower edge is configured for being adapted to the periphery of the second plate (2).

Therefore, each of the parts shows a U-shaped configuration where the arms of the U are the prolongations housed inside the manifolds (8, 9) of the second fluid. Once they are attached to one another, they give rise to the walls (6, 7) of the evaporator.

At the beginning of the description it was indicated that expansion of the exchange tubes (3) is greater at one end of the evaporator than at the other end. In the general case, given that the three steps are identified in the evaporator, the increase in temperature is not linear, nor is the degree of expansion of the exchange tubes (3) according to the longitudinal direction X-X' according to the forward movement direction of the flow of the second fluid.

According to another embodiment, the first plate (1), the second plate (2) or both (1, 2) are elastically deformable, allowing bending according to an axis parallel to such plates and perpendicular to longitudinal direction X-X'.

The property of being elastically deformable according to this direction, according to the described embodiments, is achieved by configuring the chambers (1.1, 2.1) of the plates according to the transverse direction with respect to the larger sides of the plate (1, 2) and by choosing the means for closing the chambers on the outer face, facilitating said elastic deformation.

## Claims

1. An evaporator for the evaporation of a first fluid by means of the heat provided by a second fluid, the second fluid being a hot gas, wherein said evaporator comprises:
a first plate (1) and a second plate (2) facing one another and arranged spaced from one another, defining an inner face, the face facing the other plate, and an outer face opposite the inner face; wherein each of the plates (1, 2) comprises a plurality of chambers (1.1, 2.1);
an intake manifold (4) of the first fluid and an exhaust manifold (5) of the first fluid situated in fluid communication with one another and with at least one different chamber (1.1, 2.1) of any of the plates (1, 2);
a plurality of heat exchange tubes (3) wherein each of the heat exchange tubes (3) extends between a chamber (1.1) of the first plate (1) and a chamber (2.1) of the second plate (2); wherein each chamber (1.1, 2.1) of one plate (1, 2) is in fluid communication with two or more chambers (1.1, 2.1) of the other plate (1, 2) by means of at least two heat exchange tubes (3), except the chambers (1.1, 2.1) in fluid communication with the intake manifold (4) or the exhaust manifold (5);
there being for each of the heat exchange tubes (3) a path of fluid communication from the intake manifold (4) to the exhaust manifold (5) passing through the inside of said heat exchange tube (3);
two side walls (6) extending between the first plate (1) and the second plate (2) housing the plurality of heat exchange tubes (3) and establishing between both a space for the passage of the second fluid, wherein the second fluid enters through an inlet (12) and exits through an outlet (02);
wherein the side walls (6) are elastically deformable, which allows compensating the differential expansion between the heat exchange tubes (3) and said side walls (6),
and wherein the evaporator additionally comprises second walls (7), situated between the first plate (1) and the second plate (2), these second walls (7) being spaced from the first walls (6), the second walls (7) being elastically deformable and arranged internally with respect to the first walls (6),wherein the stiffness of the first walls (6) is greater than the stiffness of the second walls (7).

2. The evaporator according to the preceding claim, wherein the tubes (3) are elastically deformable according to their longitudinal direction.

3. The evaporator according to any of the preceding claims, wherein the first side walls (6), the second side walls (7) or both are elastically deformable by means of one or more crimps or corrugations (6.1, 7.1).

4. The evaporator according to claim 3, wherein the crimps (6.1, 7.1) have a main direction according to the longitudinal direction established between the inlet (12) and the outlet (02) of the second fluid.

5. The evaporator according to claim 3 or 4, wherein the crimps (6.1, 7.1) have a sinusoidal path.

6. The evaporator according to any of the preceding claims, wherein the stiffness constant of the elastically deformable second walls (7) is less than the stiffness constant of the elastically deformable first walls (6).

7. The evaporator according to any of the claims, wherein the gas inlet (12), the gas outlet (02) or both have a manifold (8, 9).

8. The evaporator according to any of the preceding claims and claim 8, wherein:
1. the second walls (7) are prolonged inside one or more intake/exhaust manifolds of the second fluid (8, 9); and,
2. at least one prolongation of the second walls (7) inside the manifold (8, 9) is spaced from said manifold (8, 9) .

9. The evaporator according to any of the preceding claims, wherein between the first walls (6) and the second walls (7) there is a chamber that is in fluid communication with the intake manifold (4) of the first fluid such that the entrance of the first fluid in the evaporator is carried out by means of previous passage through the chamber formed between the first and second walls (6, 7).

10. The evaporator according to any of the preceding claims, comprising:
- either a first shield plate (11) located in the passage space of the second fluid, spaced from the first plate (1),
- or else a second shield plate (11) located in the passage space of the second fluid, spaced from the second plate (2); or,
- or else both shield plates (11);
wherein the shield plates (11) have multiple of perforations for the passage of the heat exchange tubes (3) leaving a chamber between said shield plates (11) and their corresponding plates (1, 2) for protecting the welds between the exchange tubes (3) and said plates (1, 2).

11. The evaporator according to any of the preceding claims, wherein the second walls (7) and the shield plate or plates (11) are configured as a single part.

12. The evaporator according to any of the preceding claims, wherein there are thermal insulation means in the chamber (10) situated between the first walls (6) and the second walls (7).

13. The evaporator according to any of the preceding claims, wherein either the first walls (6), or else the second walls (7) or both (6, 7) extend along the outer side of the first plate (1) and along the outer side of the second plate (2), being attached to one another, configuring a shell.

14. The evaporator according to claim 13, wherein either the first walls (6), or else the second walls (7) or both, are configured in the form of two U-shaped halves attached to one another.

15. The evaporator according to any of the preceding claims, wherein the first plate (1), the second plate (2) or both (1, 2) allow bending according to the direction perpendicular to the longitudinal direction established between the inlet (12) and the outlet (02) of the second fluid.

16. A heat recovery system for internal combustion vehicles comprising an evaporator according to any of the preceding claims.

## Patentansprüche

1. Verdampfer zum Verdampfen eines ersten Fluids mittels durch ein zweites Fluid bereitgestellter Wärme, wobei das zweite Fluid ein heißes Gas ist und der Verdampfer Folgendes umfasst:
eine erste Platte (1) und eine zweite Platte (2), die einander gegenüberliegen und voneinander beabstandet angeordnet sind und eine innere Fläche, welche der anderen Platte zugewandt ist, und eine der inneren Fläche gegenüberliegende äußere Fläche definieren; wobei die Platten (1, 2) jeweils eine Vielzahl von Kammern (1.1, 2.1) umfassen;
einen Ansaugstutzen (4) für das erste Fluid und einen Auslassstutzen (5) für das erste Fluid, welche miteinander und mit mindestens einer jeweils unterschiedlichen Kammer (1.1, 2.1) einer der Platten (1, 2) in Fluidverbindung stehen;
eine Vielzahl von Wärmetauscherrohren (3), wobei sich die Wärmetauscherrohre (3) jeweils zwischen einer Kammer (1.1) der ersten Platte (1) und einer Kammer (2.1) der zweiten Platte (2) erstrecken; wobei jede Kammer (1.1, 2.1) einer Platte (1, 2) mit Ausnahme der Kammern (1.1, 2.1), die mit dem Ansaugstutzen (4) oder dem Auslassstutzen (5) in Fluidverbindung stehen, über mindestens zwei Wärmetauscherrohre (3) mit zwei oder mehr Kammern (1.1, 2.1) der anderen Platte (1, 2) in Fluidverbindung steht;
einen für jedes Wärmetauscherrohr (3) vorgesehenen Fluidverbindungsweg von dem Ansaugstutzen (4) zu dem Auslassstutzen (5), welcher sich durch das Innere des Wärmetauscherrohrs (3) erstreckt; und zwei Seitenwände (6), die sich zwischen der ersten Platte (1) und der zweiten Platte (2) erstrecken, welche die Vielzahl von Wärmetauscherrohren (3) aufnehmen, und dazwischen einen Raum für den Durchfluss des zweiten Fluids ausbilden, wobei das zweite Fluid durch einen Einlass (I2) eintritt und durch einen Auslass (O2) austritt;
wobei die Seitenwände (6) elastisch verformbar sind, wodurch die unterschiedliche Ausdehnung zwischen den Wärmetauscherrohren (3) und den Seitenwänden (6) kompensierbar ist, und wobei der Verdampfer des Weiteren zwischen der ersten Platte (1) und der zweiten Platte (2) angeordnete zweite Wände (7) umfasst, welche von den ersten Wänden (6) beabstandet sind, wobei die zweiten Wände (7) elastisch verformbar sind und bezogen auf die ersten Wände (6) innenliegend angeordnet sind, wobei die Steifigkeit der ersten Wände (6) größer ist als die Steifigkeit der zweiten Wände (7).

2. Verdampfer nach dem vorhergehenden Anspruch, wobei die Rohre (3) entlang ihrer Längsrichtung elastisch verformbar sind.

3. Verdampfer nach einem der vorhergehenden Ansprüche, wobei die ersten Seitenwände (6) und/oder die zweiten Seitenwände (7) durch eine oder mehrere Sicken oder Wellungen (6.1, 7.1) elastisch verformbar sind.

4. Verdampfer nach Anspruch 3, wobei die Sicken (6.1, 7.1) eine Hauptrichtung entlang der zwischen dem Einlass (I2) und dem Auslass (O2) für das zweite Fluid gebildeten Längsrichtung aufweisen.

5. Verdampfer nach Anspruch 3 oder 4, wobei die Sicken (6.1, 7.1) einen sinusförmigen Verlauf aufweisen.

6. Verdampfer nach einem der vorhergehenden Ansprüche, wobei die Steifigkeitskonstante der elastisch verformbaren zweiten Wände (7) kleiner ist als die Steifigkeitskonstante der elastisch verformbaren ersten Wände (6).

7. Verdampfer nach einem der vorhergehenden Ansprüche, wobei der Gaseinlass (I2) und/oder der Gasauslass (O2) einen Stutzen (8, 9) aufweisen.

8. Verdampfer nach einem der vorhergehenden Ansprüche, wobei:
1. die zweiten Wände (7) in einen oder mehrere Ansaug-/Auslassstutzen (8, 9) für das zweite Fluid hinein verlängert sind; und
2. mindestens eine Verlängerung der zweiten Wände (7) in dem Stutzen (8, 9) von dem Stutzen (8, 9) beabstandet ist.

9. Verdampfer nach einem der vorhergehenden Ansprüche, wobei zwischen den ersten Wänden (6) und den zweiten Wänden (7) eine Kammer vorgesehen ist, welche mit dem Ansaugstutzen (4) für das erste Fluid derart in Fluidverbindung steht, dass der Eintritt des ersten Fluids in den Verdampfer unter vorherigem Durchfluss durch die zwischen den ersten und den zweiten Wänden (6, 7) ausgebildete Kammer erfolgt.

10. Verdampfer nach einem der vorhergehenden Ansprüche, umfassend:
- entweder eine in dem Durchflussraum für das zweite Fluid angeordnete erste Abschirmplatte (11), die von der erste Platte (1) beabstandet ist,
- oder eine in dem Durchflussraum für das zweite Fluid angeordnete zweite Abschirmplatte (11), die von der zweiten Platte (2) beabstandet ist;
- oder beide Abschirmplatten (11);
wobei die Abschirmplatten (11) zum Schutz der Schweißnähte zwischen den Wärmetauscherrohren (3) und den Platten (1, 2) eine Vielzahl von Perforationen zum Durchtritt der eine Kammer zwischen den Abschirmplatten (11) und ihren zugeordneten Platten (1,2) verlassenden Wärmetauscherrohre (3) umfassen.

11. Verdampfer nach einem der vorhergehenden Ansprüche, wobei die zweiten Wände (7) und die Abschirmplatte bzw. -platten (11) einstückig ausgebildet sind.

12. Verdampfer nach einem der vorhergehenden Ansprüche, wobei in der zwischen den ersten Wänden (6) und den zweiten Wänden (7) gebildeten Kammer (10) Wärmedämmmittel vorgesehen sind.

13. Verdampfer nach einem der vorhergehenden Ansprüche, wobei sich die ersten Wände (6) und/oder die zweiten Wände (7) entlang der Außenseite der ersten Platte (1) und entlang der Außenseite der zweiten Platte (2) erstrecken, wobei die Wände und die Platten unter Ausbildung eines Mantels aneinander befestigt sind.

14. Verdampfer nach Anspruch 13, wobei die ersten Wände (6) und/oder die zweiten Wände (7) in Form zweier aneinander befestigter U-förmiger Hälften ausgebildet sind.

15. Verdampfer nach einem der vorstehenden Ansprüche, wobei die erste Platte (1) und/oder die zweite Platte (2) quer zu der zwischen dem Einlass (I2) und dem Auslass (O2) für das zweite Fluid gebildeten Längsrichtung biegbar sind.

16. Wärmerückgewinnungssystem für Fahrzeuge mit Verbrennungsmotor, umfassend einen Verdampfer nach einem der vorhergehenden Ansprüche.

## Revendications

1. Evaporateur pour l'évaporation d'un premier fluide au moyen de la chaleur fournie par un second fluide, le second fluide étant un gaz chaud, dans lequel ledit évaporateur comprend :
une première plaque (1) et une seconde plaque (2) se faisant face l'une à l'autre et disposées à distance l'une de l'autre, définissant une face interne, la face faisant face à l'autre plaque, et une face externe opposée à la face interne ; dans lequel chacune des plaques (1, 2) comprend plusieurs chambres (1.1, 2.1) ;
un collecteur d'admission (4) du premier fluide et un collecteur d'évacuation (5) du premier fluide situés dans une communication fluide l'un avec l'autre et avec au moins une chambre différente (1.1, 2.1) de l'une quelconque des plaques (1, 2) ;
plusieurs tubes d'échange de chaleur (3) dans lesquels chacun des tubes d'échange de chaleur (3) s'étend entre une chambre (1.1) de la première plaque (1) et une chambre (2.1) de la seconde plaque (2) ; dans lequel chaque chambre (1.1, 2.1) d'une plaque (1, 2) est en communication fluide avec deux chambres ou plus (1.1, 2.1) de l'autre plaque (1, 2) au moyen d'au moins deux tubes d'échange de chaleur (3), à l'exception des chambres (1.1, 2.1) en communication fluide avec le collecteur d'admission (4) ou le collecteur d'évacuation (5) ;
il y a pour chacun des tubes d'échange de chaleur (3) une trajectoire de communication fluide du collecteur d'admission (4) vers le collecteur d'évacuation (5) passant à travers l'intérieur dudit tube d'échange de chaleur (3) ;
deux parois latérales (6) s'étendant entre la première plaque (1) et la seconde plaque (2) logeant les plusieurs tubes d'échange de chaleur (3) et établissant entre les deux un espace pour le passage du second fluide, dans lequel le second fluide entre par une entrée (I2) et sort par une sortie (O2) ;
dans lequel les parois latérales (6) sont élastiquement déformables, ce qui permet une compensation de la dilatation différentielle entre les tubes d'échange de chaleur (3) et lesdites parois latérales (6),
et dans lequel l'évaporateur comprend de plus de secondes parois (7), situées entre la première plaque (1) et la second plaque (2), ces secondes parois (7) étant espacées des premières parois (6), les secondes parois (7) étant élastiquement déformables et disposées de manière interne par rapport aux premières parois (6), dans lequel la rigidité des premières parois (6) est supérieure à la rigidité des secondes parois (7).

2. Evaporateur selon la revendication précédente, dans lequel les tubes (3) sont élastiquement déformables selon leur direction longitudinale.

3. Evaporateur selon l'une quelconque des revendications précédentes, dans lequel les premières parois latérales (6), les secondes parois latérales (7) ou les deux sont élastiquement déformables au moyen d'un ou plusieurs plis ou ondulations (6.1, 7.1).

4. Evaporateur selon la revendication 3, dans lequel les plis (6.1, 7.1) présentent une direction principale selon la direction longitudinale établie entre l'entrée (12) et la sortie (O2) du second fluide.

5. Evaporateur selon la revendication 3 ou 4, dans lequel les plis (6.1, 7.1) présentent une trajectoire sinusoïdale.

6. Evaporateur selon l'une quelconque des revendications précédentes, dans lequel la constante de rigidité des secondes parois élastiquement déformables (7) est inférieure à la constante de rigidité des premières parois élastiquement déformables (6).

7. Evaporateur selon l'une quelconque des revendications, dans lequel l'entrée de gaz (12), la sortie de gaz (O2) ou les deux présentent un collecteur (8, 9).

8. Evaporateur selon l'une quelconque des revendications précédentes et la revendication 8, dans lequel :
1. les secondes parois (7) sont prolongées à l'intérieur d'un ou plusieurs collecteurs d'admission/évacuation du second fluide (8, 9) ; et,
2. au moins une prolongation des secondes parois (7) à l'intérieur du collecteur (8, 9) est espacée dudit collecteur (8, 9).

9. Evaporateur selon l'une quelconque des revendications précédentes, dans lequel entre les premières parois (6) et les secondes parois (7) il y a une chambre qui est en communication fluide avec le collecteur d'admission (4) du premier fluide de sorte que l'entrée du premier fluide dans l'évaporateur est réalisée au moyen d'un passage préalable à travers la chambre formée entre les première et seconde parois (6, 7).

10. Evaporateur selon l'une quelconque des revendications précédentes, comprenant :
- soit une première plaque d'écran (11) disposée dans l'espace de passage du second fluide, espacée de la première plaque (1),
- soit une seconde plaque d'écran (11) disposée dans le second espace du second fluide, espacée de la seconde plaque (2) ; ou,
- soit les deux plaques d'écran (11) ;
dans lequel les plaques d'écran (11) présentent de multiples perforations pour le passage des tubes d'échange de chaleur (3) quittant une chambre entre lesdites plaques d'écran (11) et leurs plaques correspondantes (1, 2) pour protéger les soudures entre les tubes d'échange (3) et lesdites plaques (1, 2).

11. Evaporateur selon l'une quelconque des revendications précédentes, dans lequel les secondes parois (7) et la plaque ou les plaques d'écran (11) sont configurées comme une seule partie.

12. Evaporateur selon l'une quelconque des revendications précédentes, dans lequel il y a des moyens d'isolation thermique dans la chambre (10) situés entre les premières parois (6) et les secondes parois (7).

13. Evaporateur selon l'une quelconque des revendications précédentes, dans lequel soit les premières parois (6), soit les secondes parois (7) soit les deux (6, 7) s'étendent le long du côté externe de la première plaque (1) et le long du côté externe de la seconde plaque (2), étant fixées les unes aux autres, configurant une enveloppe.

14. Evaporateur selon la revendication 13, dans lequel soit les premières parois (6), soit les secondes parois (7) soit les deux, sont configurées dans la forme de deux moitiés en forme de U fixées l'une à l'autre.

15. Evaporateur selon l'une quelconque des revendications précédentes, dans lequel la première plaque (1), la seconde plaque (2) ou les deux (1, 2) permettent une courbure selon la direction perpendiculaire à la direction longitudinale établie entre l'entrée (12) et la sortie (O2) du second fluide.

16. Système de récupération de chaleur pour véhicules à combustion interne comprenant un évaporateur selon l'une quelconque des revendications précédentes.
